Europäisches Patentamt

European Patent Office

Office européen des brevets

(11) Veröffentlichungsnummer: **0 200 165 B1**

(19)

# EUROPÄISCHE PATENTSCHRIFT

(45) Veröffentlichungstag der Patentschrift: **31.07.91**  (51) Int. Cl.5: **C12C 7/00**

(21) Anmeldenummer: **86105681.0**

(22) Anmeldetag: **24.04.86**

(54) Verfahren und Vorrichtung zum Weichen und Nassschroten von Braumaterialien.

(30) Priorität: **02.05.85 DE 3515816**

(43) Veröffentlichungstag der Anmeldung:
**05.11.86 Patentblatt 86/45**

(45) Bekanntmachung des Hinweises auf die
Patenterteilung:
**31.07.91 Patentblatt 91/31**

(84) Benannte Vertragsstaaten:
**BE DE FR NL**

(56) Entgegenhaltungen:
**DE-A- 2 533 555**
**DE-B- 2 928 168**
**DE-C- 405 491**
**GB-A- 2 062 495**

(73) Patentinhaber: **Anton Steinecker Maschinen-**
**fabrik GmbH**
**Münchnerstrasse 18**
**W-8050 Freising(DE)**

(72) Erfinder: **Widhopf, Martin**
**Amselweg 8**
**W-8050 Freising-Pulling(DE)**

(74) Vertreter: **Patentanwälte Grünecker, Kinkel-**
**dey, Stockmair & Partner**
**Maximilianstrasse 58**
**W-8000 München 22(DE)**

Rank Xerox (UK) Business Services

## Beschreibung

Die vorliegende Erfindung betrifft ein Verfahren zum Weichen und Naßschroten von Braumaterialien, bei dem das Braumaterial aus einem Vorratsbehälter kontinuierlich entnommen und anschließend in etwa gleichen Portionen auf einer Kreisbahn geführt wird, wobei Weichwasser in Überfluß zugeführt und das überschüssige Weichwasser gesammelt und abgeführt wird, und schließlich das Braumaterial der Naßschrotmühle zugeführt wird.

Die Erfindung betrifft darüber hinaus eine Vorrichtung zum Weichen und Naßschroten von Braumaterialien, mit einem Vorratsbehälter, einer sich daran vertikal anschließenden, von einem Gehäuse umgebenen, drehbaren Dosierweichwalze mit radial nach außen offenen Weichkammern, und einer unterhalb der Dosierweichwalze angeordneten Naßschrotmühle.

Ziel solcher bekannter Verfahren und Vorrichtungen ist es, im Rahmen der Bierherstellung das Braumaterial, meist Malz oder Gerste, zunächst mit Wasser zu weichen und für die nachfolgende Naßschrotung zu konditionieren. Die gesamte Braumaterialmenge soll dabei möglichst gleichmäßig und ohne Lufteinschlüsse geweicht werden, so daß eine gleichmäßige Schrotung des Braumaterials erzielt wird.

Ein bekanntes Verfahren und eine bekannte Vorrichtung sind in der DE-PS 29 45 976 beschrieben. Die Vorrichtung umfaßt eine Dosierweichwalze unterhalb derer die Naßschrotmühle angeordnet ist. Zwischen der Naßschrotmühle und der Dosierweichwalze ist ein Nachweichschacht angeordnet. Das Braumaterial wird aus dem Vorratsbehälter mittels der Dosierweichwalze entnommen, wobei die Weichkammern der Dosierweichwalze mit Weichwasser überflutet werden, während sich die Dosierwalze dreht. Reichlich vor dem unteren Scheitelpunkt bewegen sich die Weichkammern über ein Lochsieb, durch welches das überschüssige Weichwasser abgeführt wird. Hinter dem unteren Scheitelpunkt fällt das Braumaterial, an dem im wesentlichen nur noch Weichwasser anhaftet, in den Nachweichschacht und wird nach einiger Zeit von dort entnommen und über eine Speisewalze der Naßschrotmühle zugeführt.

Im Gegensatz zu bekannten Verfahren, welche nur mit einem Weichschacht arbeiten, bietet das aus der DE-PS 29 45 946 bekannte Verfahren bereits den Vorteil, daß das Weichwasser nicht exakt dosiert dem Braumaterial zugeführt werden muß, sondern daß eine Überflutung des Braumaterials möglich ist, da das überschüssige Weichwasser über einen Siebboden abgeführt wird.

Nachteilig ist aber, daß die Bauhöhe der Weichvorrichtung durch den Weichschacht eine erhebliche Größe annimmt. Desweiteren ist das geweichte Braumaterial nur bedingt rieselfähig, wodurch die Entnahme aus dem Weichschacht erschwert wird.

Der Erfindung liegt daher die Aufgabe zugrunde, ein Verfahren und eine Vorrichtung der eingangs genannten Art derart zu verbessern, daß durch Vereinfachung des Verfahrens der Bauaufwand der Vorrichtung verringert wird.

Diese Aufgabe wird bezüglich des Verfahrens dadurch gelöst, daß der Weichvorgang ausschließlich während des Transportes der Braumaterials auf der Kreisbahn durchgeführt und anschließend das geweichte Braumaterial der Naßschrotmühle unmittelbar zugeleitet wird.

Nunmehr ist es möglich, die Weichzeit des Braumaterials durch die Transportdauer auf der Kreisbahn vorzubestimmen. Dadurch, daß das geweichte Braumaterial der Naßschrotmühle unmittelbar zugeleitet wird, entfallen die unvorherbestimmbaren Nachweichzeiten in einem etwaigen Weichschacht, so daß eine gleichmäßige Schrotung des Braumaterials gewährleistet wird.

Bezüglich der Vorrichtung wird die Aufgabe dadurch gelöst, daß die Dosierweichwalze durch die Wahl der Größe der Weichkammern und die Drehzahl derselben zur Durchführung des gesamten Weichvorganges ausgebildet ist, und daß sich die Naßschrotmühle unmittelbar an die Dosierweichwalze anschließt.

Diese Vorrichtung eignet sich besonders gut zur Durchführung des erfindungsgemäßen Verfahrens. Sie hat darüber hinaus den Vorteil, daß die Bauhöhe der Vorrichtung durch Verzicht des Weichschachtes erheblich verringert werden kann. Die Weichzeit des Braumaterials läßt sich in einfacher Weise über die Drehzahl der Dosierweichwalze regeln.

Besonders vorteilhaft ist es, wenn die Weichkammern mit einem bezüglich der Dosierweichwalze radial innenliegend siebartigen Zwischenboden zum Abführen des überschüssigen Weichwassers versehen sind. Das hat den Vorteil, daß das Braumaterial undosiert mit Wasser überflutet werden kann, wobei das Wasser unmittelbar nach dem Überflutungsvorgang vertikal nach unten durch den Siebboden entweichen kann. Obgleich auf diese Art eine besonders gute Befeuchtung des Braumaterials gewährleistet ist, wird eine spezielle Dosiereinrichtung für die Wasserzuführung entbehrlich.

Weiterhin ist von Vorteil, daß eine Wasserzuführung im Bereich des Scheitels der Kreisbahn der Dosierwalze am Gehäuse angebracht ist. Dadurch wird erreicht, daß das Weichwasser zum Teil mit dem Braumaterial in die Weichkammer einströmt und daß die offene Seite der Weichkammer nach Befüllen derselben an der Wasserzuführung vorbeistreicht, wodurch eine Befeuchtung des Braumaterials ohne die Gefahr von Lufteinschlüssen geschieht.

Für eine Verlängerung der Weichzeit in der Dosierweichwalze, ohne Vergrößerung der Weichkammern oder Herabsetzen der Drehzahl der Dosierweichwalze, wird auf einfache Weise dadurch erreicht, daß die Zuführung der Dosierweichwalze für das Braumaterial entgegen deren Drehrichtung exzentrisch angeordnet ist. Das bedeutet, daß die Weichkammern vor Erreichen des oberen Scheitelpunktes der Kreisbahn bereits mit Braumaterial gefüllt sind.

Eine weitere Steigerung der Weichzeit läßt sich dadurch erreichen, daß die Abführung der Dosierweichwalze für das Braumaterial in deren Drehrichtung exzentrisch angeordnet ist. Das Gehäuse der Weichwalze nimmt eine kropfartige Gestalt an. Die Zuführung und die Abführung der Dosierweichwalze können miteinander fluchten.

Im folgenden wird ein Ausführungsbeispiel der Erfindung anhand einer Zeichnung näher erläutert.

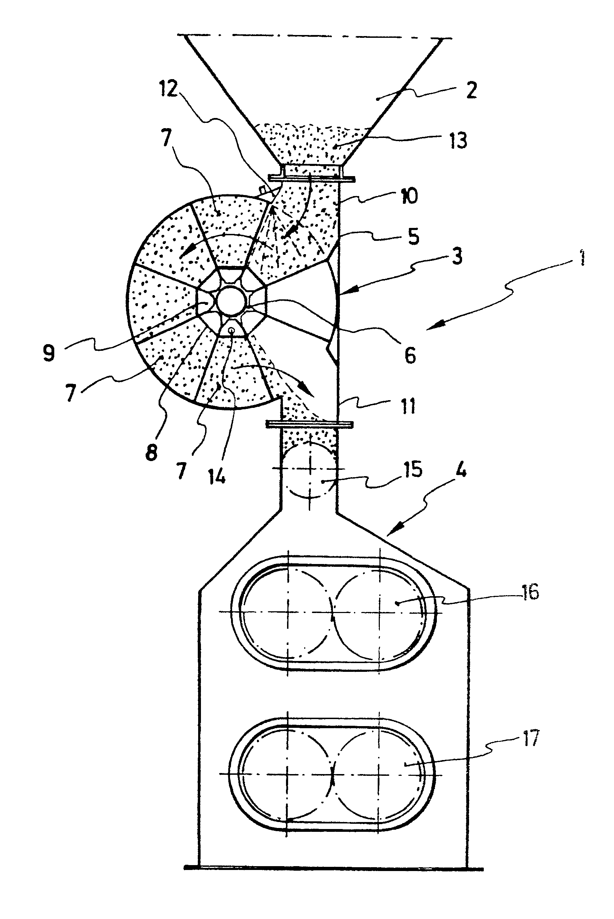

Die einzige Figur zeigt eine Vorrichtung 1 zum Weichen und Naßschroten von Malz oder Gerste, mit einem Vorratsbehälter 2 und einer sich daran vertikal unterhalb anschließenden Weicheinrichtung 3. Unterhalb der Weicheinrichtung 3 schließt sich unmittelbar eine Naßschrotmühle 4 an.

Die Weicheinrichtung 3 umfaßt ein Gehäuse 5, in welchem eine Dosierweichwalze 6 angeordnet ist. Die Dosierweichwalze 6 besitzt über ihren Umfang verteilt sich radial nach außen erstreckende Weichkammern 7, welche nach außen hin offen ausgebildet sind und nach innen durch einen siebartigen Zwischenboden 8 verschlossen sind. Der siebartige Zwischenboden 8 unterteilt die segmentartigen Kammern in die Weichkammer 7 und eine weiter radial innen angeordnete Sammelkammer 9 für das Weichwasser.

Das Gehäuse 5 der Weicheinrichtung 3 ist kropfartig ausgebildet, wobei sich in dem kropfartigen Teil die Dosierweichwalze 6 befindet. Seitlich an den Kropf anschließend befindet sich vertikal angeordnet ein Einfüllstutzen 10 zwischen dem Vorratsbehälter 2 und der Dosierweichwalze 6. In ähnlicher Weise befindet sich unterhalb der Dosierweichwalze ein Ausgabestutzen 11. Die Achsen des Einfüllstutzens 10 und des Ausgabestutzens 11 fluchten miteinander. Die Drehachse der Dosierweichwalze 6 ist quer und mit Abstand zu der Achse der Stutzen 10 und 11 angeordnet.

Zwischen den Einfüllstutzen 10 und dem oberen Scheitelpunkt des Gehäuses 5 befindet sich eine Wasserzuführung 12, mittels welcher die Weichkammern 7 während und vor allen Dingen nach deren Befüllung mit dem Braumaterial 13 überflutet werden. In den nicht dargestellten Seitendeckeln der Weicheinrichtung 3 befindet sich noch ein seitlicher Auslauf 14 zum Entfernen des Weichwassers aus den Sammelkammern 9.

Die unmittelbar unterhalb der Weichvorrichtung 3 angeordnete Naßschrotmühle weist eine herkömmliche Speisewalze 15 auf. Die Drehzahl der Speisewalze 15 und der Dosierweichwalze sind aufeinander abgestimmt, so daß sich in dem Ausgabestutzen 11 kaum Braumaterial 13 ansammeln kann. Unterhalb der Speisewalze 15 ist ein oberes Quetschwalzenpaar 16 vorgesehen. Darunter befindet sich ein zweites Quetschwalzenpaar 17. Das obere Quetschwalzenpaar kann dabei zur Vorschrotung und das untere zur Nachschrotung verwendet werden.

Im folgenden wird die Durchführung des Verfahrens mit Hilfe der zuvor beschriebenen Vorrichtung erläutert.

Zunächst befindet sich das Braumamterial 13 in dem oben angeordneten Vorratsbehälter 2. Von dort gelangt das Braumaterial 13 von seitlich oben in die Weichvorrichtung 3, genauer in die dem Einfüllstutzen 10 zugewandte Weichkammer 7. Gleichzeitig mit der Befüllung der Weichkammer 7 wird über die Wasserzuführung 12 Weichwasser in die Weichkammer 7 eingeführt. Das Weichwasser wird mit Überschuß zugeführt. Die Dosierwalze dreht sich, wie in der Figur dargestellt, entgegen dem Uhrzeigersinn, so daß die eben befüllte Weichkammer 7 zunächst den Scheitelpunkt der Kreisbahn erreicht. Das überschüssige Weichwasser sickert während des Transportes des Braumaterials 13 durch den siebartigen Zwischenboden 8 in die Sammelkammer 9 der Dosierwalze 6.

Das angefeuchtete Braumaterial 13 wird nun auf der Kreisbahn so langsam bewegt, daß es am Ende, also bei Verlassen der Weichkammer 7 vollständig geweicht ist. Am Ende des Weichvorganges rutscht das Braumaterial aus der Weichkammer 7 durch den Ausgabestutzen 11 auf die Speisewalze 15 und wird von dort sofort den Quetschwalzenpaaren 16 und 17 der Naßschrotmühle 4 zugeführt.

Durch die umlaufende Dosierweichwalze 6 wird eine kontinuierliche Entnahme des Braumaterials 13 aus dem Vorratsbehälter 2 und eine gleichzeitige kontinuierliche Weichung erreicht. Die Verweilzeiten des Braumaterials in der Weichvorrichtung 3 können genau bestimmt werden, da das Braumaterial während des Weichvorganges zwangsweise transportiert wird.

**Patentansprüche**

1. Verfahren zum Weichen und Naßschroten von Braumaterialien, bei dem das Braumaterial aus einem Vorratsbehälter kontinuierlich entnommen und anschließend in etwa gleichen Portionen auf einer Kreisbahn geführt wird, wobei Weichwasser im Überfluß zugeführt und das überschüssige Weichwasser gesammelt und abgeführt wird, und schließlich das Braumaterial der Naßschrotmühle zugeleitet wird, dadurch **gekennzeichnet,** daß der Weichvorgang ausschließlich während des Transportes des Braumaterials (13) auf der Kreisbahn durchgeführt und anschließend das geweichte Braumaterial (13) der Naßschrotmühle (4) unmittelbar zugeleitet wird.

2. Vorrichtung zum Weichen und Naßschroten von Braumaterialien (13), mit einem Vorratsbehälter (2), einer sich daran vertikal anschließenden, von einem Gehäuse umgebenen, drehbaren Dosierweichwalze (6) mit radial nach außen offenen Weichkammern (7), und einer unterhalb der Dosierweichwalze angeordneten Naßschrotmühle (4), dadurch **gekennzeichnet,** daß die Dosierweichwalze (6) durch die Wahl der Größe der Weichkammern (7) und die Drehzahl derselben zur Durchführung des gesamten Weichvorganges ausgebildet ist und daß sich die Naßschrotmühle (4) unmittelbar an die Dosierweichwalze (6) anschließt.

3. Vorrichtung nach Anspruch 2, dadurch **gekennzeichnet,** daß die Weichkammern (7) mit einem bezüglich der Dosierweichwalze (6) radial innenliegenden, siebartigen Zwischenboden (8) zum Abführen des überschüssigen Weichwassers versehen sind.

4. Vorrichtung nach Anspruch 2 oder 3, dadurch **gekennzeichnet,** daß eine Wasserzuführung (12) im Bereich des Scheitels der Kreisbahn der Dosierwalze (6) am Gehäuse (5) angebracht ist.

5. Vorrichtung nach mindestens einem der Ansprüche 2 bis 4, dadurch **gekennzeichnet,** daß die Zuführung (10) der Dosierweichwalze (6) für das Braumaterial (13) entgegen deren Drehrichtung exzentrisch angeordnet ist.

6. Vorrichtung nach mindestens einem der Ansprüche 2 bis 5, dadurch **gekennzeichnet,** daß die Abführung (11) der Dosierweichwalze (6) für das Braumaterial (13) in deren Drehrichtung exzentrisch angeordnet ist.

## Claims

1. A method of steeping and wet-milling brewing materials, in which the brewing material is continuously taken from a reservoir and then guided over a circular path in substantially equal portions, steeping water being supplied in excess and the surplus steeping water being collected and discharged, and the brewing material finally being fed to the wet-milling mill, characterised in that the steeping operation is carried out solely during conveyance of the brewing material (13) over the circular path and then the steeped brewing material (13) is fed directly to the wet-milling mill (4).

2. Apparatus for steeping and wet-milling brewing materials (13), comprising a reservoir (2) vertically adjoining which is a rotatable metering steeping roller (6) surrounded by a housing and having radially outwardly open steeping chambers (7), and a wet-milling mill (4) disposed beneath the metering steeping roller, characterised in that the metering steeping roller (6) is so constructed, by selection of the size of the steeping chambers (7) and the speed of rotation thereof, as to allow the entire steeping operation to be carried out, and in that the wet-milling mill (4) directly adjoins the metering steeping roller (6).

3. Apparatus according to claim 2, characterised in that the steeping chambers (7) are provided with a partition (8) in the form of a screen for the discharge of the excess steeping water, said partition (8) being situated radially inwards with respect to the metering steeping roller (6).

4. Apparatus according to claim 2 or 3, characterised in that a water supply (12) is provided in the region of the apex of the circular path of the metering roller (6) on the housing (5).

5. Apparatus according to at least one of claims 2 to 4, characterised in that the supply (10) to the metering steeping roller (6) for the brewing material (13) is disposed eccentrically and in opposition to the direction of rotation of said roller.

6. Apparatus according to at least one of claims 2 to 5, characterised in that the discharge (11) from the metering steeping roller (6) for the brewing material (13) is disposed eccentrically and in the direction of rotation thereof.

## Revendications

1. Procédé pour le trempage et la mouture humide de matières premières pour la fabrication de la bière, dans lequel la matière à brasser est prélevée en continu sur un réservoir et ensuite guidée en portions à peu près égales sur une voie circulaire, processus au cours duquel de l'eau de trempage est amenée en excès et l'eau de trempage excédentaire est rassemblée et évacuée, et enfin la matière à brasser est amenée au moulin de mouture humide, caractérisé en ce que le processus de trempage s'effectue exclusivement durant le transport de la matière à brasser (13) sur la voie circulaire et la matière à brasser trempée (13) est ensuite directement amenée au moulin de mouture humide (4).

2. Dispositif pour le trempage et la mouture humide de matières (13) pour la fabrication de la bière, comprenant un réservoir (2), un cylindre de trempage doseur rotatif (6) qui, faisant verticalement suite au réservoir et entouré par une enveloppe, est muni de chambres de trempage (7) ouvertes radialement vers l'extérieur, et un moulin de mouture humide (4) monté au-dessous du cylindre de trempage doseur, caractérisé en ce que grâce au choix de la taille des chambres de trempage (7) et de la vitesse de rotation de celles-ci le cylindre de trempage doseur (6) est réalisé pour effectuer l'ensemble du processus de trempage et en ce que le moulin de mouture humide (4) fait directement suite au cylindre de trempage doseur (6).

3. Dispositif selon la revendication 2, caractérisé en ce que les chambres de trempage (7) sont munies d'un fond intermédiaire (8) du genre tamis qui est disposé radialement vers l'intérieur par rapport au cylindre de trempage doseur (6) et sert à évacuer l'eau de trempage excédentaire.

4. Dispositif selon la revendication 2 ou 3, caractérisé en ce qu'une amenée d'eau (12) est disposée sur l'enveloppe (5) dans la région du point culminant de la voie circulaire du cylindre doseur (6).

5. Dispositif selon l'une quelconque des revendications 2 à 4, caractérisé en ce que la tubulure (10) alimentant le cylindre de trempage doseur (6) en matière à brasser (13) est disposée de façon excentrée dans le sens opposé au sens de rotation de ce dernier.

6. Dispositif selon l'une quelconque des revendications 2 à 5, caractérisé en ce que la tubulure (11) évacuant la matière à brasser (13) du cylindre de trempage doseur (6) est disposée de façon excentrée dans le sens de rotation de ce dernier.